# EUROPEAN PATENT SPECIFICATION

(11) **EP 0 433 631 B1**
(45) Date of publication and mention of the grant of the patent: **10.02.1993**
(21) Application number: 90121218.3
(22) Date of filing: 06.11.1990
(51) Int. Cl.: E03D 5/10, E03C 1/05

(54) **Charge exhaustion preventive system of storage battery**
System zum Verhindern der Erschöpfung der Ladung einer Vorratsbatterie
Système pour prévenir l'exténuation de la charge d'une batterie de stockage

(30) Priority: 17.11.1989 JP 134010/89
(43) Date of publication of application: 26.06.1991
(73) Proprietor: INAX CORPORATION, Tokoname-Shi Aichi (JP)
(72) Inventor: Yasuo, Takashi, c/o Inax Corporation, Tokoname-Shi, Aichi (JP)
(74) Representative: Grünecker, Kinkeldey, Stockmair & Schwanhäusser Anwaltssozietät

(56) References cited:
- EP-A- 0 228 908
- WO-A-85/01337
- DE-U- 8 902 238
- FR-A- 2 564 121

## Description

The present invention relates to a charge exhaustion preventive system of a storage battery, and more particularly to a system in which a generator is actuated by a stream of water so as to feed a storage battery and an electromagnetic valve or other equipments with the storage battery as a power source.

As an automatic flushing unit of a urinal, an apparatus of a type having an electromagnetic valve disposed on a waterway, a human body detecting sensor which detects a human body, and a control portion which performs actuation control of the electromagnetic valve, and in which a human body is detected with the human body detecting'sensor when it stands in front of the urinal, the control unit actuates the electromagnetic valve to open based on the detection signal from the sensor, and flushing water is made to flow out automatically (FR-A-2 564 121).

Now, in such an automatic flushing unit, it is being considered to dispose a generator on a waterway so as to generate power by a stream of water, thereby to charge a storage battery and to actuate the unit with such a storage battery as the power source (WO-A-85/1337). In this case, since the unit does not work if the capacity of the storage battery drops below a certain level, it is also considered to use a dry element battery as a backup battery. However, when the storage battery is to be backed up by a dry element battery, maintenance work becomes troublesome in such a way that the dry element battery has to be checked to find out if it has been consumed or has to be replaced.

Such problems are caused in common not only in an automatic flushing unit of a urinal, but also in an apparatus of a type in which a generator is disposed on a waterway so as to charge a storage battery and to actuate variety of equipments with this storage battery as the power source.

It is an object of the present invention to provide a charge exhaustion preventive system of a storage battery in which a dry element battery is not required in particular as a backup battery because charging of the storage battery is effected automatically, thus making it possible to omit troublesome work for the maintenance of the backup battery.

This object is solved by the features of claim 1.

The subject matter of the invention exists in a composition that there are provided a generator disposed on a waterway, a storage battery charged by the generator, an electromagnetic valve which opens and closes the waterway with the storage battery as power source, a control portion which controls the action of the electromagnetic valve, and a capacity detecting portion which detects the capacity of the storage battery (remaining electric energy charged), and the control portion actuates the electromagnetic valve to open so as to produce a stream of water when the capacity decreases below a certain capacity based on a detection signal from the capacity detecting portion, thereby to actuate the generator.

In a system of the present invention, the capacity of the storage battery is always monitored by means of the capacity detecting portion and the control portion, and the electromagnetic valve is actuated automatically thereby to actuate the generator when the capacity decreases below a predetermined capacity, that is charging of the storage battery is performed automatically. Accordingly, it is not necessary to specially provide a dry element battery as a backup battery. Thus, troublesome work for the maintenance of the backup battery may be omitted.

In a further development of the invention the control portion actuates the electromagnetic valve to open intermittently so as to produce a stream of water at a predetermined time interval obtained from a balance between power consumption and power supply, thereby to prevent the capacity of the storage battery from decreasing below a certain capacity.

In the automatic flushing unit of a urinal in which an electromagnetic valve, a sensor and the like are actuated with a storage battery as a power source, the electric energy stored in the storage battery is consumed usually with the lapse of time, and it is considered the consumption quantity gets more as the elapsed time gets longer. That is, it may be considered that the consumption quantity of the electric energy is a function of time.

According to the present invention, a generator is actuated intermittently at a predetermined time interval so as to charge a storage battery and a time interval required for balancing the electric power consumed after the lapse of certain time with the electric power supplied by the generator is obtained, thereby to control action control of the electromagnetic valve so that the electromagnetic valve operates intermittently at least within the time interval.

With this, the capacity of the storage battery is prevented from dropping below a certain level. Thus, the backup battery may be omitted, and maintenance work of such a backup battery can be omitted.

### BRIEF DESCRIPTION OF THE DRAWINGS

Fig. 1 is a block diagram showing an embodiment of an automatic flushing unit of the present invention;
Fig. 2 is a side sectional view showing the automatic flushing unit shown in Fig. 1 along with a urinal; and
Fig. 3 is a flow chart showing contents of control of the control portion in the automatic flushing unit shown in Fig. 1.

### DESCRIPTION OF THE PREFERRED EMBODIMENTS

In the next place, an embodiment of the present invention will be described in detail with reference to the drawings.

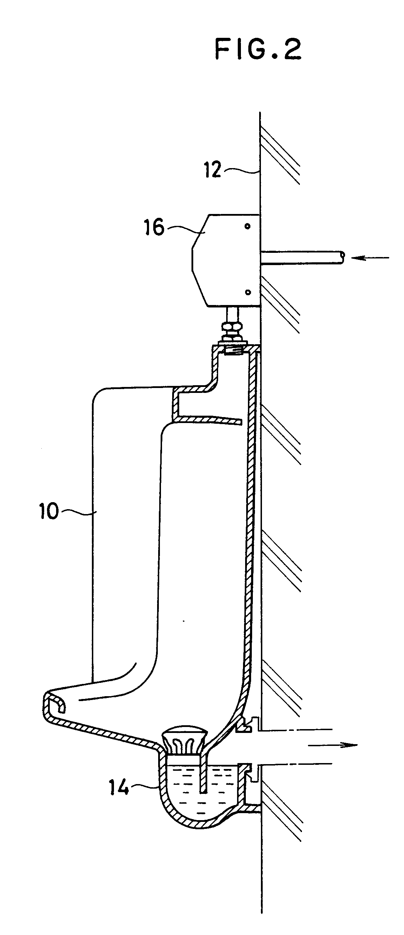

In Fig. 2, 10 indicates a urinal installed adjacent to a wall surface 12, which has a trap portion 14 in the lower part thereof. By means of seal water at this trap portion 14, the back flow of odor from a drainage pipe is prevented.

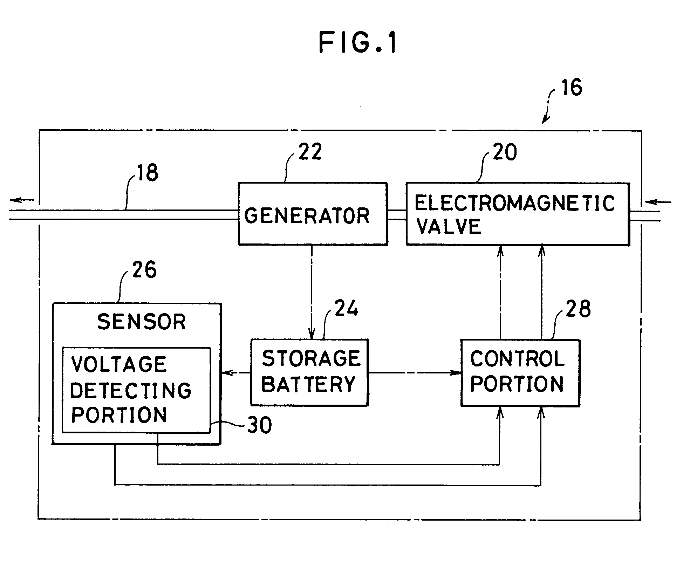

16 indicates an automatic flushing unit of the urinal 10. An electromagnetic valve 20 is disposed on a waterway 18 as shown in Fig. 1, and communication and cutoff of the waterway are performed by the action of this electromagnetic valve 20.

A generator 22 is provided on the downstream side of the electromagnetic valve 20, and the storage battery 24 is charged by power generation of this generator 22.

The automatic flushing unit 16 of the present embodiment is provided additionally with a human body detecting sensor 26 and a control portion 28 which are actuated with the storage battery 24 as the power source. The sensor 26 detects a human body for example by emitting infrared rays and receiving a reflected light reflected by the human body, and the detected signal thereof is input to the control portion 28 and the control portion 28 actuates the electromagnetic valve 20 to open based on this signal so as to discharge flushing water.

In the circuit of this sensor 26, a voltage detecting portion 30 as a capacity detecting portion of the storage battery 24 is provided, and a signal from this voltage detecting portion 30 is input to the control portion 28. Thus, the control portion 28 actuates the electromagnetic valve 20 to open by the signal from this voltage detecting portion 30 when the voltage of the storage battery 24 drops below a certain voltage, thereby to actuate the generator 22 so as to charge the storage battery 24.

Furthermore, the control portion 28 actuates the electromagnetic valve 20 automatically after the lapse of certain time with the time when flushing water was discharged lastly as the starting point.

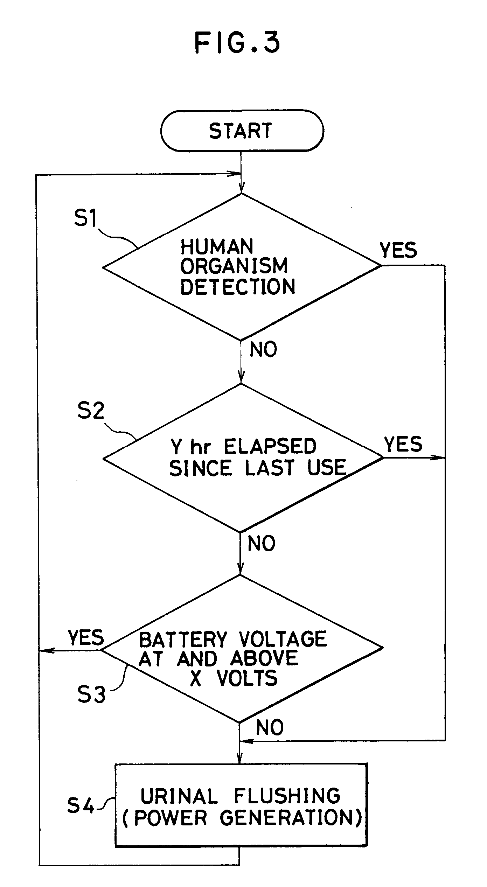

The carrying-out procedures of the control by this control portion 28 are shown as a flow chart in Fig. 3. First, it is judged whether a human body is detected or not in step S1, the process is jumped to S4 thereby to actuate the electromagnetic valve 20 when a human body is detected so as to flush the urinal 10. At this time, the generator 22 is naturally actuated so as to charge the storage battery 24.

On the other hand, when it is judged that no human body is detected in S1, it is judged whether a preset time y has elapsed or not since the time when flushing water was discharged lastly, and the process is jumped to S4 so as to discharge flushing water when the time y has elapsed. Besides, this time y may be set at 8.5 hours for instance.

This time y has been obtained so that the voltage of the storage battery 24 does not drop below a certain voltage, but it is possible to prevent seal water from diminishing or disappearing by evaporation at the abovementioned trap portion 14 by flowing flushing water at least at a certain time interval. That is, the seal water at the trap portion 14 diminishes by evaporation after long time has elapsed without discharging flushing water and the trap action is suspended finally, thus causing odor to flow backwards, but the storage battery 24 is charged and the loss of trap action is prevented by discharging flushing water at least at a certain time interval.

Now, when it is judged that the time y has not elapsed yet since the time when flushing water was discharged lastly in S2, it is judged in S3 whether the battery voltage is at and above a certain voltage (x volts), and flushing water is discharged when the battery voltage is lower than the certain voltage so as to charge the storage battery 24.

On the other hand, when the battery voltage is above the certain voltage, respective steps are executed again starting from S1 after discharging flushing water for a certain period of time in S4.

An automatic flushing unit which discharges flushing water automatically by detecting a human body with the sensor 26 has been described above as an example. However, the present invention may be composed in configurations to which variety of modifications are applied based on the knowledge of those skilled in the art without departing from the spirit and scope of the present invention in such a manner that it is applicable to a unit in which a urinal is flushed by discharging flushing water at intervals of a certain time from a high tank (a water reservoir installed near to a ceiling of a toilet room, and is also applicable to other general units of a type which has an electromagnetic valve and a generator on a water and charges a storage battery by means of the generator so as to actuate variety of equipments.

## Claims

1. A charge exhaustion preventive system of a storage battery, comprising
a generator (22) disposed on a waterway (18),
a storage battery (24) charged by said generator (22),
an electromagnetic valve (20) which opens and closes said waterway (18) with said storage battery (24) as the power source, and
a control portion (28) which controls the action of said electromagnetic valve (20), and
a capacity detecting portion (30) which detects the capacity of said storage battery (24);
said control portion (28) actuating said electromagnetic valve (20) to open so as to produce a stream of water when said capacity decreases below a certain capacity based on a detection signal from said capacity detecting portion (30), thereby actuating said generator (22).

2. A charge exhaustion preventive system according to claim 1, wherein said electromagnetic valve (20) is opened intermittently as well so as to produce a stream of water at a predetermined time interval obtained from a balance between power consumption and power supply, thereby to prevent the capacity of said storage battery (24) from decreasing below a certain capacity.

3. A charge exhaustion preventive system according to claim 1 or 2 wherein said waterway (18) is a waterway which feeds flushing water to a urinal (10).

## Patentansprüche

1. System zum Verhindern der Erschöpfung der Ladung einer Speicherbatterie mit
einem Generator (22), der an einem Wasserweg (18) angeordnet ist,
einer Speicherbatterie (24), die von dem Generator (22) geladen wird,
einem elektromagnetischen Ventil (20), das mit der Speicherbatterie (24) als Speisequelle den Wasserweg (18) öffnet und schließt,
einem Steuerteil (28), das die Betätigung des elektromagnetischen Ventils (20) steuert, und
einem Kapazitätserfassungsteil (30), der die Kapazität der Speicherbatterie (24) erfaßt, wobei
der Steuerteil (28) aufgrund eines Erfassungssignals von dem Kapazitätserfassungsteil (30) das elektromagnetische Ventil (20) zum Öffnen betätigt, um einen Wasserstrom zu erzeugen, wem die Kapazität unter eine bestimmte Kapazität fällt, wodurch der Generator (22) betätigt wird.

2. System zum Verhindern der Erschöpfung nach Anspruch 1, wobei das elektromagnetische Ventil (20) intermittierend geöffnet wird, wie auch derart, daß ein Wasserstrom zu einem bestimmten Zeitintervall erzeugt wird, das aus einem Abgleich zwischen Leistungsverbrauch und Leistungszufuhr erhalten wird, wodurch verhindert wird, daß die Kapazität der Speicherbatterie (24) unter eine bestimmte Kapazität abfällt.

3. System zum Verhindern der Erschöpfung nach Anspruch 1 oder 2, wobei der Wasserweg (18) ein Spülwasser zu einem Urinal (10) zuführender Wasserweg ist.

## Revendications

1. Système pour prévenir l'épuisement de la charge d'une batterie de stockage, comprenant:
un générateur (22) disposé sur une canalisation d'eau (18),
une batterie de stockage (24) chargée par ledit générateur (22),
une vanne électromagnétique (20) qui ouvre et ferme ladite canalisation d'eau (18), ladite batterie de stockage (24) servant de source d'énergie,
une section de commande (28) qui commande l'actionnement de ladite vanne électromagnétique (20), et
une section de détection de capacité (30) qui détecte la capacité de ladite batterie de stockage (24);
ladite section de commande (28) actionnant ladite vanne électromagnétique (20) pour l'ouvrir et produire un courant d'eau lorsque ladite capacité décroît en-dessous d'une certaine valeur, en fonction d'un signal de détection provenant de ladite section de détection (30), ce qui a pour résultat d'actionner ledit générateur (22).

2. Système pour prévenir l'épuisement de charge selon la revendication 1, dans lequel ladite vanne électromagnétique (20) est également ouverte par intermittence pour produire un courant d'eau selon un intervalle de temps prédéterminé obtenu à partir d'un équilibre entre la consommation d'énergie et la production d'énergie, afin d'empêcher que la capacité de ladite batterie de stockage (24) ne décroisse en-dessous d'une certaine valeur.

3. Système pour prévenir l'épuisement de charge selon la revendication 1 ou 2, dans lequel ladite canalisation d'eau est une canalisation qui alimente la chasse d'eau d'un urinoir (10).
